# EUROPÄISCHE PATENTANMELDUNG

(11) **EP 4 607 205 A1**
(43) Veröffentlichungstag der Anmeldung: **27.08.2025**
(21) Anmeldenummer: 25156431.6
(22) Anmeldetag: 07.02.2025
(51) Int. Cl.: G01P 3/481, G01P 3/488, G01P 13/04, G01D 5/14, G01P 1/02

(54) **SENSOR ZUR ERFASSUNG EINER DREHGESCHWINDIGKEIT UND/ODER DREHRICHTUNG EINES RADES EINES FAHRZEUGES, SYSTEM UMFASSEND EINEN SOLCHEN SENSOR UND FAHRZEUG UMFASSEND EIN SOLCHES SYSTEM**

(30) Priorität: 20.02.2024 DE 102024104617
(71) Anmelder: KNORR-BREMSE Systeme für Nutzfahrzeuge GmbH, 80809 München (DE)
(72) Erfinder: HUBER, Christian, 80937 München (DE); BOLLIG, Patrick, 75417 Mühlacker (DE); MLYNARSKI, Amadeus, 85579 München (DE); SESSELMANN, Andreas, 83714 Miesbach (DE); THIERFELDER, Felix, 85716 Unterschleißheim (DE)

(57) **Zusammenfassung**

Ein Aspekt der vorliegenden Erfindung betrifft einen Sensor (10) zur Erfassung einer Drehgeschwindigkeit und/oder Drehrichtung eines Rades eines Fahrzeuges, umfassend: einen ersten Magnetfeldsensorchip (12a) und einen zweiten Magnetfeldsensorchip (12b), wobei der erste und zweite Magnetfeldsensorchip (12a, 12b) jeweils voneinander unabhängig zur Ausgabe eines Sensorsignals konfiguriert sind, das kennzeichnend für eine Änderung eines vorgespannten Magnetfelds unter Einfluss eines rotierenden Polrades (P) ist, das mit dem Rad des Fahrzeuges gekoppelt ist; einen Aufnahmekörper (14) mit einer ersten Aufnahme (16a), durch die der erste Magnetfeldsensorchip (12a) aufgenommen ist, und einer zweiten Aufnahme (16b), durch die der zweite Magnetfeldsensorchip (12b) aufgenommen ist; und mindestens einen Permanentmagneten (18) zur Erzeugung des vorgespannten Magnetfeldes, wobei der mindestens eine Permanentmagnet (18) in dem Aufnahmekörper (14) an zumindest einer der ersten und zweiten Aufnahme (16a, 16b) angeordnet ist. Weitere Aspekte betreffen ein System umfassend einen solchen Sensor und ein Fahrzeug umfassend ein solches System.

## Beschreibung

Die vorliegende Erfindung betrifft einen Sensor zur Erfassung einer Drehgeschwindigkeit und/oder Drehrichtung eines Rades eines Fahrzeuges, ein System umfassend einen solchen Sensor und ein Fahrzeug umfassend ein solches System.

Im Stand der Technik, insbesondere auf dem Gebiet der Nutzfahrzeuge, existieren Sensoren zur Erfassung einer Drehgeschwindigkeit und/oder Drehrichtung eines Rades mit einem Magnetfeldsensorchip, der herkömmlicherweise von einem Verkapselungsmaterial aus beispielsweise einem Polymer umhüllte integrierte Schaltungen zur Messung und Auswertung von Magnetfeldern und deren Änderungen aufweist. Ferner haben diese Sensoren einen Permanentmagneten als sogenannten Back-Bias-Magneten zur Erzeugung eines Magnetfeldes, dessen Änderungen der Magnetfeldsensorchip wahrnehmen kann, wenn kein anderes Magnetfeld, zum Beispiel erzeugt durch ein magnetisches Objekt wie ein Multipolrad eines Personenkraftfahrzeuges, vorhanden ist. Der Permanentmagnet dient hierbei der magnetischen Vorspannung des Magnetfeldsensorchips, damit dieser eine Magnetfeldänderung wahrnehmen kann, die durch ein nichtmagnetisches Objekt wie ein Polrad eines Nutzfahrzeuges hervorgerufen wird, das mit einem Rad des Nutzfahrzeuges gekoppelt ist und das die Magnetfeldlinien des durch den Permanentmagneten vorgespannten Magnetfeldes beeinflussen kann.

Speziell im Bereich autonom fahrender Nutzfahrzeuge ist es wünschenswert langlebige und ausfallsichere Sensoren zu haben, die obendrein platzsparend sind.

Es ist daher Aufgabe der vorliegenden Erfindung, einen verbesserten Sensor zur Erfassung einer Drehgeschwindigkeit und/oder Drehrichtung eines Rades eines Fahrzeuges, ein System, das einen solchen Sensor umfasst, und ein Fahrzeug, das ein solches System umfasst, bereitzustellen.

Diese Aufgabe wird durch die unabhängigen Patentansprüche gelöst. Beispielhafte Ausführungsformen ergeben sich aus den abhängigen Patentansprüchen.

Erfindungsgemäß wird ein Sensor zur Erfassung einer Drehgeschwindigkeit und/oder Drehrichtung eines Rades eines Fahrzeuges bereitgestellt, wobei der Sensor umfasst: einen ersten Magnetfeldsensorchip und einen zweiten Magnetfeldsensorchip, wobei der erste und zweite Magnetfeldsensorchip jeweils voneinander unabhängig zur Ausgabe eines Sensorsignals konfiguriert sind, das kennzeichnend für eine Änderung eines vorgespannten Magnetfelds unter Einfluss eines rotierenden Polrades ist, das mit dem Rad des Fahrzeuges gekoppelt ist; einen Aufnahmekörper mit einer ersten Aufnahme, durch die der erste Magnetfeldsensorchip aufgenommen ist, und einer zweiten Aufnahme, durch die der zweite Magnetfeldsensorchip aufgenommen ist; und mindestens einen Permanentmagneten zur Erzeugung des vorgespannten Magnetfeldes, wobei der mindestens eine Permanentmagnet in dem Aufnahmekörper an zumindest einer der ersten und zweiten Aufnahme angeordnet ist.

Vorteilhafterweise kann durch einen erfindungsgemäßen Sensor eine auf besonders platzsparende Weise redundante Erfassung einer Drehgeschwindigkeit und/oder Drehrichtung eines Rades eines Fahrzeuges erreicht werden. Die zwei Magnetfeldsensorchips, der erste und der zweite Magnetfeldsensorchip, können unabhängig voneinander operieren, sodass einer der beiden Magnetfeldsensorchips ausfallen kann und trotzdem die Drehgeschwindigkeit und/oder Drehrichtung mithilfe des anderen Magnetfeldsensorchips erfasst werden kann. Hierdurch wird die Ausfallsicherheit und Verlässlichkeit eines Sensors zur Erfassung einer Drehgeschwindigkeit und/oder Drehrichtung eines Rades erhöht.

Durch die Anordnung des ersten und des zweiten Magnetfeldsensorchips in jeweils einer der beiden Aufnahmen, der ersten und der zweiten Aufnahme, und des mindestens einen Permanentmagneten, der im Allgemeinen ein relativ großes Bauteil ist, an zumindest einer der beiden Aufnahmen ist es möglich, einen kompakten und platzsparenden Sensor zur Erfassung einer Drehgeschwindigkeit und/oder Drehrichtung eines Rades bereitzustellen.

Gemäß einer Ausführungsform ist das Sensorsignal ein analoges oder digitales elektrisches Signal.

Gemäß einer Ausführungsform hat der Aufnahmekörper eine Längenausdehnung und eine Querausdehnung quer zur Längenausdehnung, die kürzer als die Längenausdehnung ist und insbesondere im Wesentlichen senkrecht zur Längenausdehnung ist.

Gemäß einer Ausführungsform hat der Aufnahmekörper Quaderform oder Zylinderform.

Gemäß einer Ausführungsform sind die erste und zweite Aufnahme quer zu einer Längsachse des Aufnahmekörpers nebeneinander angeordnet. Insbesondere können die erste Aufnahme und die zweite Aufnahme im Wesentlichen parallel zu einer Laufrichtung oder Drehrichtung eines Polrads nebeneinander angeordnet sein. Die erste und zweite Aufnahme können im Wesentlichen parallel zu dem Vektor der Laufrichtung oder Drehrichtung, der tangential zu dem Polrad ist, nebeneinander angeordnet sein. Die erste und zweite Aufnahme können im Wesentlichen in tangentialer Richtung zu dem Polrad nebeneinander angeordnet sein.

Durch diese Ausführungsform lässt sich ein besonders kompakter und platzsparender Sensor bereitstellen, der in der Lage ist, Drehgeschwindigkeiten und/oder Drehrichtungen eines Rades redundant zu erfassen.

Gemäß einer Ausführungsform sind die erste und zweite Aufnahme entlang einer Längsachse des Aufnahmekörpers hintereinander angeordnet. Insbesondere können die erste und zweite Aufnahme im Wesentlichen senkrecht zu einer Laufrichtung oder Drehrichtung eines Polrads hintereinander angeordnet sein. Die erste und zweite Aufnahme können im Wesentlichen senkrecht zu dem Vektor der Laufrichtung oder Drehrichtung, der tangential zu dem Polrad ist, hintereinander angeordnet sein. Die erste und zweite Aufnahme können im Wesentlichen in radialer Richtung zu dem Polrad hintereinander angeordnet sein.

Durch diese Ausführungsform lässt sich ebenfalls ein besonders kompakter und platzsparender Sensor bereitstellen, der in der Lage ist, Drehgeschwindigkeiten und/oder Drehrichtungen eines Rades redundant zu erfassen.

Gemäß einer Ausführungsform ist die erste Aufnahme entlang einer Längsachse des Aufnahmekörpers an einem oder nahe eines Längsendes des Aufnahmekörpers angeordnet. Ferner ist die zweite Aufnahme entlang der Längsachse des Aufnahmekörpers an einem oder nahe des Längsendes des Aufnahmekörpers angeordnet.

Gemäß einer Ausführungsform sind die erste Aufnahme und die zweite Aufnahme an einem einem Polrad zu zuwendenden Ende des Aufnahmekörpers angeordnet.

Gemäß einer Ausführungsform ist der mindestens eine Permanentmagnet in Längenausdehnungsrichtung des Aufnahmekörpers von einem Längsende des Aufnahmekörpers hinter dem ersten und zweiten Magnetfeldsensorchip angeordnet.

Gemäß einer Ausführungsform ist der mindestens eine Permanentmagnet in Richtung von einem einem Polrad zu zuwendenden Ende des Aufnahmekörpers hinter dem ersten Magnetfeldsensorchip und dem zweiten Magnetfeldsensorchip angeordnet.

Gemäß einer Ausführungsform ist der mindestens eine Permanentmagnet an zumindest einem des ersten und zweiten Magnetfeldsensorchips befestigt. Der mindestens eine Permanentmagnet kann zum Beispiel auf eine Außenfläche, insbesondere des Verkapselungsmaterials, des ersten, des zweiten oder des ersten und zweiten Magnetfeldsensorchips aufgeklebt sein. Insbesondere kann der mindestens eine Permanentmagnet in zumindest einem des ersten und zweiten Magnetfeldsensorchips integriert sein. Der mindestens eine Permanentmagnet kann zum Beispiel im ersten, zweiten oder im ersten und zweiten Magnetfeldsensorchip integriert sein. Der mindestens eine Permanentmagnet kann vom Verkapselungsmaterial des ersten, zweiten oder des ersten und zweiten Magnetfeldsensorchips umhüllt sein oder in dieses eingelassen sein.

Gemäß einer Ausführungsform ist der mindestens eine Permanentmagnet größer als der erste Magnetfeldsensorchip und/oder der zweite Magnetfeldsensorchip.

Jeder des mindestens einen Permanentmagneten kann ein Magnetfeld erzeugen. Die erzeugten Magnetfelder können sich zu einem Gesamtmagnetfeld addieren oder überlagern. Der erste und der zweite Magnetfeldsensorchip können jeweils Änderungen des Gesamtmagnetfeldes wahrnehmen und/oder erfassen.

Gemäß einer Ausführungsform umfasst der Aufnahmekörper eine dritte Aufnahme, durch die der mindestens eine Permanentmagnet aufgenommen ist.

Durch die dritte Aufnahme ist es möglich, den mindestens einen Permanentmagneten sicher in dem Aufnahmekörper unterzubringen. Ferner kann der Permanentmagnet ausgetauscht werden und Permanentmagneten unterschiedlicher Magnetfeldstärken können einfach verwendet werden.

Gemäß einer Ausführungsform ist die dritte Aufnahme in Längenausdehnungsrichtung des Aufnahmekörpers von einem Längsende des Aufnahmekörpers hinter der ersten und zweiten Aufnahme angeordnet. Die dritte Aufnahme kann in Richtung von einem einem Polrad zu zuwendenden Ende des Aufnahmekörpers hinter der ersten und zweiten Aufnahme angeordnet sein.

Gemäß einer Ausführungsform weist die erste Aufnahme zwei Sensorchipkontaktaufnahmen auf, um Kontaktbeinchen des ersten Magnetfeldsensorchips aufzunehmen, wenn dieser in der ersten Aufnahme angeordnet ist. In einer weiteren Ausführungsform weist die zweite Aufnahme zwei Sensorchipkontaktaufnahmen auf, um Kontaktbeinchen des zweiten Magnetfeldsensorchips aufzunehmen, wenn dieser in der zweiten Aufnahme angeordnet ist.

Gemäß einer Ausführungsform umfasst der mindestens eine Permanentmagnet einen ersten Permanentmagneten und einen zweiten Permanentmagneten, wobei der erste Permanentmagnet an der ersten Aufnahme und der zweite Permanentmagnet an der zweiten Aufnahme angeordnet ist.

Hierbei erzeugt der erste Permanentmagnet ein erstes Magnetfeld. Der zweite Permanentmagnet erzeugt ein zweites Magnetfeld. Das erste und zweite Magnetfeld können sich zu einem vorgespannten Gesamtmagnetfeld addieren oder überlagern.

Gemäß einer Ausführungsform ist der erste Permanentmagnet an dem ersten Magnetfeldsensorchip befestigt. Der erste Permanentmagnet kann zum Beispiel auf eine Außenfläche, insbesondere des Verkapselungsmaterials, des ersten Magnetfeldsensorchips aufgeklebt sein. Insbesondere kann der erste Permanentmagnet in dem ersten Magnetfeldsensorchip integriert sein. Der erste Permanentmagnet kann vom Verkapselungsmaterial des ersten Magnetfeldsensorchips umhüllt sein oder in dieses eingelassen sein. Ferner ist der zweite Permanentmagnet an dem zweiten Magnetfeldsensorchip befestigt. Der zweite Permanentmagnet kann zum Beispiel auf eine Außenfläche, insbesondere des Verkapselungsmaterials, des zweiten Magnetfeldsensorchips aufgeklebt sein. Insbesondere kann der zweite Permanentmagnet in dem zweiten Magnetfeldsensorchip integriert sein. Der zweite Permanentmagnet kann vom Verkapselungsmaterial des zweiten Magnetfeldsensorchips umhüllt sein oder in dieses eingelassen sein.

Gemäß einer Ausführungsform umfasst der Aufnahmekörper eine dritte und eine vierte Aufnahme, wobei der erste Permanentmagnet durch die dritte Aufnahme und der zweite Permanentmagnet durch die vierte Aufnahme aufgenommen ist.

Durch die dritte und vierte Aufnahme ist es möglich, den ersten und zweiten Permanentmagneten sicher in dem Aufnahmekörper unterzubringen. Ferner können der erste und zweite Permanentmagnet einfach ausgetauscht und durch Permanentmagneten unterschiedlicher Magnetfeldstärken ersetzt werden.

Gemäß einer Ausführungsform ist die dritte Aufnahme in Längenausdehnungsrichtung des Aufnahmekörpers von einem Längsende des Aufnahmekörpers hinter der ersten Aufnahme angeordnet. Die dritte Aufnahme kann insbesondere in Richtung von einem Ende des Aufnahmekörpers, das einem Polrad zu zuwendenden ist, hinter der ersten Aufnahme angeordnet sein. Ferner ist die vierte Aufnahme in Längenausdehnungsrichtung des Aufnahmekörpers von einem Längsende des Aufnahmekörpers hinter der zweiten Aufnahme angeordnet. Die vierte Aufnahme kann insbesondere in Richtung von dem Ende des Aufnahmekörpers, das dem Polrad zu zuwendenden ist, hinter der zweiten Aufnahme angeordnet sein.

Gemäß einer Ausführungsform ist der erste Permanentmagnet größer als der erste und/oder zweite Magnetfeldsensorchip. Der zweite Permanentmagnet ist größer als der zweite und/oder erste Magnetfeldsensorchip.

Gemäß einer Ausführungsform ist der erste Magnetfeldsensorchip ein Hall-Effekt-Sensorchip oder ein magnetoresistiver Sensorchip. Ferner ist der zweite Magnetfeldsensorchip ein Hall-Effekt-Sensorchip oder ein magnetoresistiver Sensorchip.

Gemäß einer Ausführungsform ist der erste Magnetfeldsensorchip ein gerichteter Sensorchip und der zweite Magnetfeldsensorchip ist ein gerichteter Sensorchip.

Unter "gerichteten" Sensorchips sind Sensorchips zu verstehen, die in einer vorbestimmten Orientierung in ein Fahrzeug zu montieren sind, sodass die Messelemente der Sensorchips zu einer Bewegung von Polrädern ausgerichtet sind, wobei sich die Ausrichtung auch während eines Betriebs nicht verändern darf. Ausführungsformen derartiger gerichteter Sensorchips und deren gerichteter Anordnung sind zum Beispiel in der Veröffentlichung DE 10 2019 125 405 A1 beschrieben, deren diesbezüglicher Inhalt in die Beschreibung durch Bezug aufgenommen ist. Insbesondere wird auf die Figuren 1 bis 7 und deren Beschreibung in der DE 10 2019 125 405 A1 verwiesen.

Gemäß einer weiteren Ausführungsform ist der erste Magnetfeldsensorchip ein omnidirektionaler Sensorchip und der zweite Magnetfeldsensorchip ist ein omnidirektionaler Sensorchip.

Unter "omnidirektionalen" Sensorchips sind Sensorchips zu verstehen, deren über die Zeit konstante Ausrichtung zu einem Polrad nicht von funktioneller Bedeutung ist. Das heißt, sie können unabhängig von der Bewegung eines Polrads montiert sein. Omnidirektionale Sensorchips können insbesondere unabhängig von einem rotierenden Polrad vorgesehen werden. Ein omnidirektionaler Sensorchip kann auch bei Relativbewegungen zwischen Polrad und Sensor durch das Polrad induzierte Magnetfeldänderungen bestimmen. Genauer gesagt funktioniert ein omnidirektionaler Sensorchip auch bei einer über die Zeit konstanten gedrehten Ausrichtung des Sensors um die Sensorachse zu einem Polrad. Trotz Relativbewegungen zwischen Sensor und Polrad kann der Sensor zweckmäßig funktionieren und Magnetfeldänderungen konsistent und ohne nennenswerte Abweichungen bestimmen.

Gemäß einer Ausführungsform ist ein omnidirektionaler Sensorchip ein Chip mit mindestens einem ersten, einem zweiten und einem dritten Magnetfeldmesselement, welche jeweils dazu angepasst sind, ein erstes, zweites und drittes Magnetfeldsignal zu liefern, deren Amplituden proportional zu einem Magnetfeld sind, das von einem rotierenden Objekt, wie zum Beispiel einem Polrad, ausgeht, oder von einem Dauermagneten oder Permanentmagneten ausgeht und durch die Bewegung des rotierenden Objekts abgelenkt wird. Die Normalenvektoren der mindestens drei Magnetfeldmesselemente sind linear unabhängig voneinander. Das bedeutet, dass diese beispielsweise jeweils einen Winkel von 90° miteinander einschließen können, wie beispielsweise ein kartesisches Koordinatensystem. Eine Signalerfassungseinheit ist dazu angepasst, ein erstes Differenzsignal und ein zweites Differenzsignal zu bestimmen, wobei das erste Differenzsignal auf einer Differenz zwischen dem Magnetfeldsignal des ersten Magnetfeldmesselements und zweiten Magnetfeldmesselements beruht, das zweite Differenzsignal auf einer Differenz zwischen den Magnetfeldsignalen des ersten Magnetfeldmesselements und des dritten Magnetfeldmesselements beruht. Die Signalerfassungseinheit ist ferner dazu angepasst, ein kombiniertes Signal zu berechnen und auszugeben, beruhend auf dem Magnetfeldsignal des ersten Magnetfeldmesselements sowie dem ersten Differenzsignal und dem zweiten Differenzsignal. Eine Auswerteeinheit ist dann dazu angepasst, ein Ausgangssignal zu erzeugen, welches eine Bewegungsgeschwindigkeit und eine Bewegungsrichtung des rotierenden Objekts beinhaltet. Ein derartiger omnidirektionaler Sensorchip ist zum Beispiel in der Veröffentlichung WO 2022/008265 A1 beschrieben, deren diesbezüglicher Inhalt in diese Beschreibung durch Bezug aufgenommen ist. Insbesondere wird auf die Figuren 1 bis 3 und deren Beschreibung der WO 2022/008265 A1 verwiesen.

Gemäß einer Ausführungsform ist der erste Magnetfeldsensorchip ein gerichteter Sensorchip und der zweite Magnetfeldsensorchip ist ein omnidirektionaler Sensorchip. Alternativ ist der erste Magnetfeldsensorchip ein omnidirektionaler Sensorchip und der zweite Magnetfeldsensorchip ist ein gerichteter Sensorchip.

Gemäß einer Ausführungsform sind der erste und der zweite Magnetfeldsensorchip von unterschiedlichen Chiptypen. Zum Beispiel können der erste und der zweite Magnetfeldsensorchip jeweils von unterschiedlichen Herstellern sein.

Durch die Verwendung unterschiedlicher Magnetfeldsensorchips, zum Beispiel von verschiedenen Herstellern, in einem Sensor können Common-Mode-Fehler reduziert oder sogar minimiert werden.

Gemäß einer Ausführungsform sind die Aufnahmen, insbesondere die erste und die zweite Aufnahme, als Kammern in dem Aufnahmekörper ausgebildet. Auch die dritte und vierte Aufnahme können als Kammern ausgebildet sein. Die Aufnahmen können auch als Taschen oder Einschübe in dem Aufnahmekörper oder als Clips ausgestaltet sein.

Gemäß einer Ausführungsform umfasst der Sensor ein Sensorgehäuse. Das Sensorgehäuse kann ferner ein Formmerkmal zur Ausrichtung des Sensors aufweisen, das geformt ist, um eine vorbestimmte Ausrichtung des Sensors zu einem Polrad zu ermöglichen.

Gemäß einer Ausführungsform weist das Sensorgehäuse Quaderform oder Zylinderform auf. Ferner kann das Sensorgehäuse eine Hülse sein.

Gemäß einer Ausführungsform ist das Formmerkmal an einer Außenfläche des Sensorgehäuses angeordnet. Das Formmerkmal kann eine sich in Längenausdehnungsrichtung des Aufnahmekörpers erstreckende Erhöhung des Sensorgehäuses sein. Insbesondere kann das Formmerkmal eine Ausrichtnase oder Ausrichtrippe sein. Ein Formmerkmal ist ferner in der Veröffentlichung DE 10 2019 125 405 A1 beschrieben, deren Inhalt in diese Beschreibung durch Bezug aufgenommen wird.

Gemäß einer Ausführungsform umfasst der Aufnahmekörper drei elektrische Kontakte zum elektrischen Kontaktieren des ersten und zweiten Magnetfeldsensorchips.

Durch ein Zusammenlegen der Masse ist es möglich statt vier elektrischen Kontakten drei elektrische Kontakte zum elektrischen Kontaktieren der Magnetfeldsensorchips im Aufnahmekörper zu haben.

Gemäß einer Ausführungsform sind die elektrischen Kontakte als Leitungen und/oder Pins ausgebildet.

Gemäß einer Ausführungsform umfasst der Sensor eine Stromschiene oder ein Stanzgitter oder Busbar als elektrischen Signalanschluss. Alternativ kann der Sensor ohne Stromschiene oder Stanzgitter oder Busbar ausgeführt sein.

Gemäß einer Ausführungsform ist der Aufnahmekörper derart konfiguriert, dass Signalkabel eingeclipst werden können. Alternativ oder zusätzlich kann das Sensorgehäuse derart konfiguriert sein, dass Signalkabel eingeclipst werden können.

Gemäß einer Ausführungsform umfasst der Sensor ferner eine Temperaturmesszelle. Beispielsweise kann die Temperaturmesszelle eine NTC-Zelle, PTC-Zelle, oder eine Z-Diode umfassen oder sein.

Gemäß einer Ausführungsform ist der Sensor ein Raddrehzahlsensor.

Erfindungsgemäß wird ferner ein System bereitgestellt, das einen erfindungsgemäßen Sensor zur Erfassung einer Drehgeschwindigkeit und/oder Drehrichtung eines Rades eines Fahrzeuges und ein Polrad, das mit dem Rad des Fahrzeuges koppelbar ist, umfasst.

Alle Vorteile eines erfindungsgemäßen Sensors lassen sich auf das erfindungsgemäße System übertragen.

Gemäß einer Ausführungsform ist das Polrad ein ferritisches Polrad.

Erfindungsgemäß wird ferner ein Fahrzeug bereitgestellt das ein erfindungsgemäßes System umfasst.

Alle Vorteile eines erfindungsgemäßen Systems lassen sich auf das erfindungsgemäße Fahrzeug übertragen.

Gemäß einer Ausführungsform ist das Fahrzeug ein Nutzfahrzeug wie zum Beispiel ein Lkw.

Es folgt die Beschreibung der Figuren. Es versteht sich, dass in den Figuren gezeigte Einzelmerkmale zu weiteren Ausführungsformen kombiniert werden können. Die Figuren zeigen:
- Fig. 1: eine Ausführungsform eines erfindungsgemäßen Sensors zur Erfassung einer Drehgeschwindigkeit und/oder Drehrichtung eines Rades eines Fahrzeuges,
- Fig. 2: eine Ausführungsform eines erfindungsgemäßen Systems,
- Fig. 3: eine Ausführungsform eines erfindungsgemäßen Systems, und
- Fig. 4: eine Ausführungsform eines erfindungsgemäßen Systems.

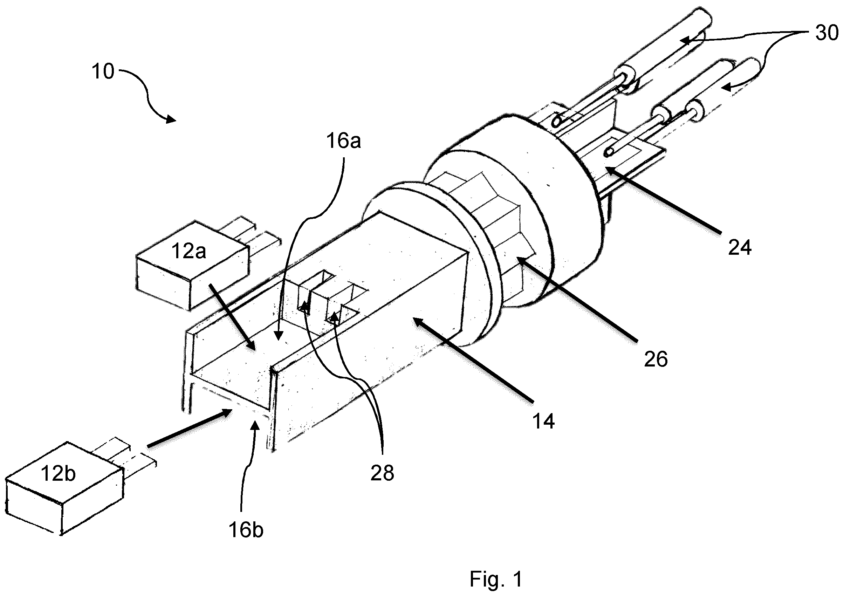

**Fig. 1** zeigt eine perspektivische Darstellung einer Ausführungsform eines erfindungsgemäßen Sensors. In dieser Ausführungsform umfasst der Sensor 10 einen quaderförmigen Aufnahmekörper 14, der auch andere geometrische Formen annehmen kann.

Der Aufnahmekörper 14 weist an einem Längsende des Aufnahmekörpers 14 zwei gegenüberliegende Aufnahmen 16a und 16b für jeweils einen Magnetfeldsensorchip 12a und 12b auf. Die erste Aufnahme 16a und die zweite Aufnahme 16b sind nebeneinander in dem Aufnahmekörper 14 angeordnet. Sie können insbesondere übereinander angeordnet sein. Die erste und zweite Aufnahme 16a, 16b können zum Beispiel jeweils als Einschub oder Einsetzöffnungen ausgebildet sein. Die erste Aufnahme 16a und die zweite Aufnahme 16b können zum Beispiel jeweils zwei Sensorchipkontaktaufnahmen 28 aufweisen, um die Kontaktbeinchen des ersten Magnetfeldsensorchips 12a und des zweiten Magnetfeldsensorchips 12b aufzunehmen, wenn diese in die jeweilige erste Aufnahme 16a und die zweite Aufnahme 16b eingesetzt sind.

Der erste Magnetfeldsensorchip 12a und der zweite Magnetfeldsensorchip 12b können jeweils einen Permanentmagneten (nicht gezeigt) aufweisen, der in dem zughörigen Magnetfeldsensorchip integriert ist.

Der Sensor 10 umfasst ferner in einer Ausführungsform an einem der ersten und zweiten Aufnahme 16a, 16b gegenüberliegenden Längsende des Aufnahmekörpers 14 eine zum Beispiel sternförmige Ausrichtgeometrie 26, um den Aufnahmekörper 14 relativ zu einem Sensorgehäuse, welches nicht gezeigt ist, ausrichten zu können. Die Ausrichtgeometrie 26 kann auch andere geometrische Formen annehmen.

Des Weiteren umfasst der Sensor 10 in einer Ausführungsform eine Busbar oder Stromschiene 24, die sich von einem der ersten und zweiten Aufnahme 16a, 16b gegenüberliegenden Längsende des Sensors 10 hin zu der ersten und zweiten Aufnahme 16a, 16b, insbesondere in die Sensorchipkontaktaufnahmen 28, erstreckt, sodass die Kontaktbeinchen des ersten Magnetfeldsensorchips 12a und des zweiten Magnetfeldsensorchips 12b, wenn diese in der jeweiligen ersten und zweiten Aufnahme 16a, 16b im Aufnahmekörper 14 eingesetzt sind, in elektrischem Kontakt mit der Busbar oder Stromschiene 24 sind.

Über die Busbar oder Stromschiene 24 kann der Sensor 10 mittels Anschlusskabeln 30 oder Anschlussdrähten in Signalverbindung mit einer externen Spannungsquelle (nicht gezeigt) und/oder mit anderen externen Komponenten wie zum Beispiel einer Signalverarbeitungseinheit (nicht gezeigt) gebracht werden.

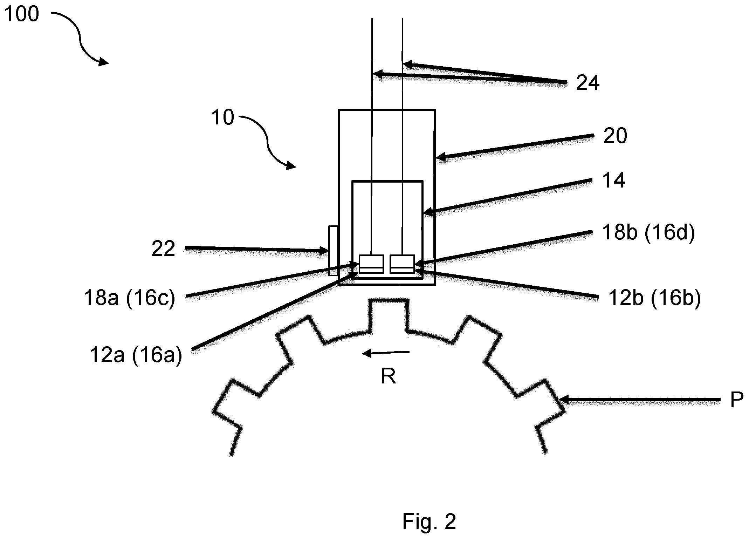

**Fig. 2** zeigt schematisch eine Ausführungsform eines erfindungsgemäßen Systems 100, welches eine Ausführungsform eines erfindungsgemäßen Sensors 10 und ein Polrad P, das insbesondere ferritisch sein kann, umfasst.

Der Sensor 10 umfasst einen Aufnahmekörper 14 mit einer ersten Aufnahme 16a für einen ersten Magnetfeldsensorchip 12a und eine zweite Aufnahme 16b für einen zweiten Magnetfeldsensorchip 12b. Der erste und zweite Magnetfeldsensorchip 12a, 12b sind jeweils gerichtete Sensorchips. Der erste Magnetfeldsensorchip 12a ist in der ersten Aufnahme 16a und der zweite Magnetfeldsensorchip 12b ist in der zweiten Aufnahme 16b angeordnet. Der Aufnahmekörper 14 kann zum Beispiel zylindrisch oder quaderförmig sein oder eine andere geometrische Gestalt haben. Die erste und zweite Aufnahme 16a, 16b sind an einem dem Polrad P zugewandten Ende des Aufnahmekörpers 14 angeordnet. Die erste und zweite Aufnahme 16a, 16b sind parallel in Laufrichtung oder Drehrichtung R des Polrads P nebeneinander angeordnet.

Der Sensor 10 umfasst weiter einen ersten Permanentmagneten 18a und einen zweiten Permanentmagneten 18b. Der Aufnahmekörper 14 kann eine dritte Aufnahme 16c, in der der erste Permanentmagnet 18a untergebracht sein kann, und eine vierte Aufnahme 16d, in der der zweite Permanentmagnet untergebracht sein kann aufweisen. Die dritte Aufnahme 16c und damit der erste Permanentmagnet 18a können in Richtung weg von dem Polrad P hinter der ersten Aufnahme 16a, in der der erste Magnetfeldsensorchip 12a untergebracht ist, angeordnet sein. Die vierte Aufnahme 16d und damit der zweite Permanentmagnet 18b können ebenfalls in Richtung weg von dem Polrad P hinter der zweiten Aufnahme 16b, in der der zweite Magnetfeldsensorchip 12b untergebracht ist, angeordnet sein. Alternativ kann der erste Permanentmagnet am ersten Magnetfeldsensorchip 12a befestigt oder in diesem integriert sein und der zweite Permanentmagnet 18b kann am zweiten Magnetfeldsensorchip 12b befestigt oder in diesem integriert sein.

Der erste Permanentmagnet 18a ist größer als der erste Magnetfeldsensorchip 12a und/oder der zweite Magnetfeldsensorchip 12b. Der zweite Permanentmagnet 18b ist größer als der zweite Magnetfeldsensorchip 12b und/oder der erste Magnetfeldsensorchip 12a.

Der Sensor 10 umfasst ferner zwei Leitungen als elektrischen Signalanschluss 24, Der erste Magnetfeldsensorchip 12a und der zweite Magnetfeldsensorchip 12b sind jeweils mit einer der zwei Leitungen 24 verbunden.

Weiter umfasst der Sensor 10 ein Sensorgehäuse 20, das den Aufnahmekörper 14 des Sensors 10 umgibt. Das Sensorgehäuse 20 kann quaderförmig oder zylindrisch sein. Es kann an die äußere Form des Aufnahmekörpers 14 angepasst sein. Die Leitungen des Signalanschlusses 24 ragen an einem von dem Polrad P wegweisenden Ende des Sensorgehäuses aus diesem hervor.

Das Sensorgehäuse 20 weist an seiner Außenfläche im Bereich der ersten und zweiten Aufnahme 16a, 16b und des ersten und zweiten Magnetfeldsensorchips 12a, 12b ein Formmerkmal 22 auf. Dieses Formmerkmal 22 ist eine sich von dem Sensorgehäuse 20, insbesondere in Querrichtung, und in Richtung weg von dem Polrad P erstreckende Ausrichtnase oder Ausrichtrippe, um den Sensor 10 relativ zum Polrad P ausrichtbar montieren zu können.

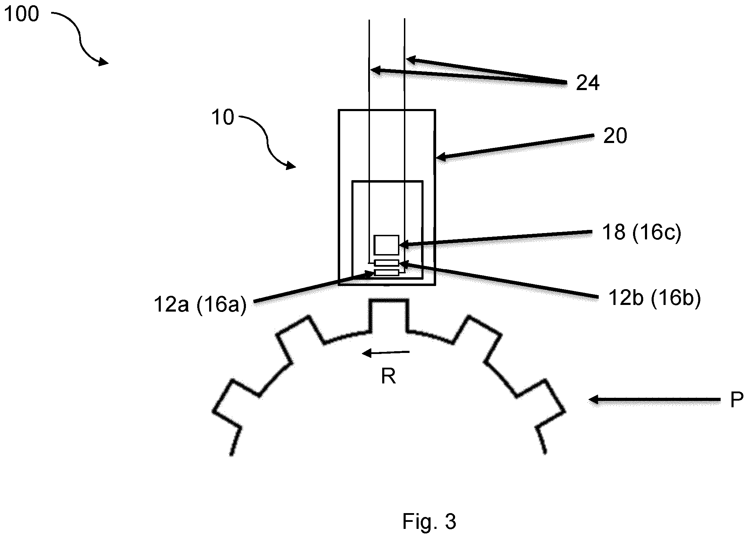

**Fig. 3** zeigt schematisch eine weitere Ausführungsform eines erfindungsgemäßen Systems 100. Das System 100 umfasst eine omnidirektionale Variante eines erfindungsgemäßen Sensors 10 und ein Polrad P, das insbesondere ferritisch sein kann. Von seinem Grundaufbau her ist der Sensor 10 ähnlich zu dem in Fig. 1 gezeigten Sensor.

Der Sensor 10 umfasst einen Aufnahmekörper 14 mit einer ersten Aufnahme 16a für einen ersten Magnetfeldsensorchip 12a und eine zweite Aufnahme 16b für einen zweiten Magnetfeldsensorchip 12b. Der erste und zweite Magnetfeldsensorchip 12a, 12b sind jeweils omnidirektionale Sensorchips. Der erste Magnetfeldsensorchip 12a ist in der ersten Aufnahme 16a und der zweite Magnetfeldsensorchip 12b ist in der zweiten Aufnahme 16b angeordnet. Der Aufnahmekörper 14 kann zum Beispiel zylindrisch oder quaderförmig sein oder eine andere geometrische Gestalt haben. Die erste und zweite Aufnahme 16a, 16b sind an einem dem Polrad P zugewandten Ende des Aufnahmekörpers 14 angeordnet. Die erste und zweite Aufnahme 16a, 16b sind senkrecht zu einer Laufrichtung oder Drehrichtung R des Polrads P oder in Richtung weg von dem Polrad P nebeneinander oder hintereinander angeordnet.

Der Sensor 10 umfasst weiter einen Permanentmagneten 18. Der Aufnahmekörper 14 weist eine dritte Aufnahme 16c auf, in der der Permanentmagnet 18 untergebracht ist. Die dritte Aufnahme 16c und der darin untergebrachte Permanentmagnet 18 sind in Richtung weg von dem Polrad P hinter der ersten Aufnahme 16a, in der der erste Magnetfeldsensorchip 12a untergebracht ist, und hinter der zweiten Aufnahme 16b, in der der zweite Magnetfeldsensorchip 12b untergebracht ist, angeordnet.

Der Permanentmagnet 18 ist größer als der erste Magnetfeldsensorchip 12a und/oder der zweite Magnetfeldsensorchip 12b.

Der Sensor 10 umfasst ferner zwei Leitungen als elektrischen Signalanschluss 24, Der erste Magnetfeldsensorchip 12a und der zweite Magnetfeldsensorchip 12b sind jeweils mit einer der zwei Leitungen 24 verbunden.

Weiter umfasst der Sensor 10 ein Sensorgehäuse 20, das den Aufnahmekörper 14 des Sensors 10 umgibt. Das Sensorgehäuse 20 kann quaderförmig oder zylindrisch sein. Es kann an die äußere Form des Aufnahmekörpers 14 angepasst sein. Die Leitungen des Signalanschlusses 24 ragen an einem von dem Polrad P wegweisenden Ende des Sensorgehäuses aus diesem hervor.

Da es sich um omnidirektionale Magnetfeldsensorchips 12a, 12b handelt weist das Sensorgehäuse kein Formmerkmal 22 auf.

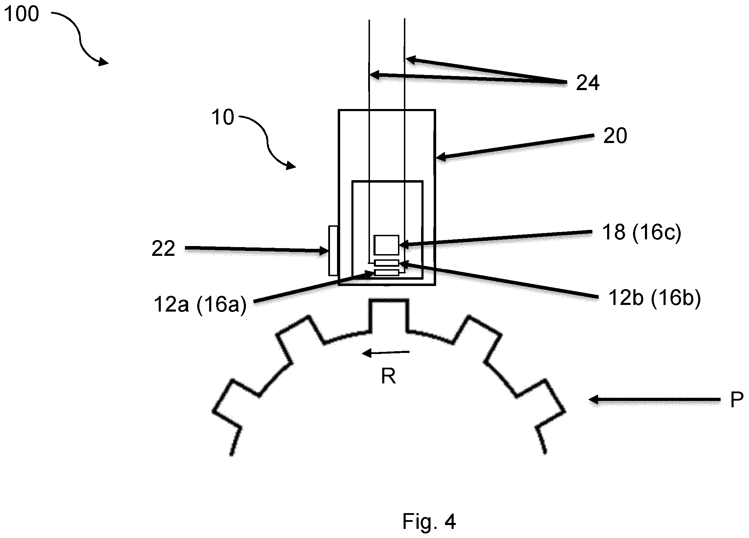

**Fig. 4** zeigt eine weitere Ausführungsform eines erfindungsgemäßen Systems 100. Das System 100 umfasst eine gerichtete Variante eines erfindungsgemäßen Sensors 10 und ein Polrad P, das insbesondere ferritisch sein kann. Von seinem Grundaufbau her ist der Sensor 10 ähnlich zu dem in Fig. 1 und/oder Fig. 2 gezeigten Sensor.

Der Sensor 10 umfasst einen Aufnahmekörper 14 mit einer ersten Aufnahme 16a für einen ersten Magnetfeldsensorchip 12a und eine zweite Aufnahme 16b für einen zweiten Magnetfeldsensorchip 12b. Der erste und zweite Magnetfeldsensorchip 12a, 12b sind jeweils gerichtete Sensorchips. Der erste Magnetfeldsensorchip 12a ist in der ersten Aufnahme 16a und der zweite Magnetfeldsensorchip 12b ist in der zweiten Aufnahme 16b angeordnet. Der Aufnahmekörper 14 kann zylindrisch oder quaderförmig sein. Die erste und zweite Aufnahme 16a, 16b sind an einem dem Polrad P zugewandten Ende des Aufnahmekörpers 14 angeordnet. Die erste und zweite Aufnahme 16a, 16b sind senkrecht zu einer Laufrichtung oder Drehrichtung R des Polrads P oder in Richtung weg von dem Polrad P nebeneinander oder hintereinander angeordnet.

Der Sensor 10 umfasst weiter einen Permanentmagneten 18. Der Aufnahmekörper 14 weist eine dritte Aufnahme 16c auf, in der der Permanentmagnet 18 untergebracht ist. Die dritte Aufnahme 16c und der darin untergebrachte Permanentmagnet 18 sind in Richtung weg von dem Polrad P hinter der ersten Aufnahme 16a, in der der erste Magnetfeldsensorchip 12a untergebracht ist, und hinter der zweiten Aufnahme 16b, in der der zweite Magnetfeldsensorchip 12b untergebracht ist, angeordnet.

Der Sensor 10 umfasst ferner zwei Leitungen als elektrischen Signalanschluss 24, Der erste Magnetfeldsensorchip 12a und der zweite Magnetfeldsensorchip 12b sind jeweils mit einer der zwei Leitungen 24 verbunden.

Weiter umfasst der Sensor 10 ein Sensorgehäuse 20, das den Aufnahmekörper 14 des Sensors 10 umgibt. Das Sensorgehäuse 20 kann quaderförmig oder zylindrisch sein. Es kann an die äußere Form des Aufnahmekörpers 14 angepasst sein. Die Leitungen des Signalanschlusses 24 ragen an einem von dem Polrad P wegweisenden Ende des Sensorgehäuses aus diesem hervor.

Das Sensorgehäuse 20 weist an seiner Außenfläche im Bereich der ersten und zweiten Aufnahme 16a, 16b und des ersten und zweiten Magnetfeldsensorchips 12a, 12b ein Formmerkmal 22 auf. Dieses Formmerkmal 22 ist eine sich von dem Sensorgehäuse 20 und in Richtung weg von dem Polrad P erstreckende Ausrichtnase oder Ausrichtrippe, um den Sensor 10 relativ zum Polrad P ausrichtbar montieren zu können.

### BEZUGSZEICHENLISTE

- 10: Sensor
- 12a: erster Magnetfeldsensorchip
- 12b: zweiter Magnetfeldsensorchip
- 14: Aufnahmekörper
- 16a: erste Aufnahme
- 16b: zweite Aufnahme
- 16c: dritte Aufnahme
- 16d: vierte Aufnahme
- 18: Permanentmagnet
- 18a: erster Permanentmagnet
- 18b: zweiter Permanentmagnet
- 20: Sensorgehäuse
- 22: Formmerkmal
- 24: elektrischer Signalanschluss
- 26: Ausrichtgeometrie
- 28: Sensorchipkontaktaufnahme
- 30: Anschlusskabel
- 100: System
- P: Polrad
- R: Laufrichtung oder Drehrichtung des Polrads

## Patentansprüche

1. Sensor (10) zur Erfassung einer Drehgeschwindigkeit und/oder Drehrichtung eines Rades eines Fahrzeuges, umfassend:
einen ersten Magnetfeldsensorchip (12a) und einen zweiten Magnetfeldsensorchip (12b), wobei der erste und zweite Magnetfeldsensorchip (12a, 12b) jeweils voneinander unabhängig zur Ausgabe eines Sensorsignals konfiguriert sind, das kennzeichnend für eine Änderung eines vorgespannten Magnetfelds unter Einfluss eines rotierenden Polrades (P) ist, das mit dem Rad des Fahrzeuges gekoppelt ist;
einen Aufnahmekörper (14) mit einer ersten Aufnahme (16a), durch die der erste Magnetfeldsensorchip (12a) aufgenommen ist, und einer zweiten Aufnahme (16b), durch die der zweite Magnetfeldsensorchip (12b) aufgenommen ist; und
mindestens einen Permanentmagneten (18) zur Erzeugung des vorgespannten Magnetfeldes, wobei der mindestens eine Permanentmagnet (18) in dem Aufnahmekörper (14) an zumindest einer der ersten und zweiten Aufnahme (16a, 16b) angeordnet ist.

2. Sensor (10) nach Anspruch 1, wobei die erste und zweite Aufnahme (16a, 16b) quer zu einer Längsachse des Aufnahmekörpers (14), insbesondere im Wesentlichen in tangentialer Richtung zu dem Polrad (P), nebeneinander angeordnet sind.

3. Sensor (10) nach einem der vorangehenden Ansprüche, wobei die erste und zweite Aufnahme (16a, 16b) entlang einer Längsachse des Aufnahmekörpers, insbesondere im Wesentlichen in radialer Richtung zu dem Polrad (P), hintereinander angeordnet sind.

4. Sensor (10) nach einem der vorangehenden Ansprüche, wobei der mindestens eine Permanentmagnet (18) an zumindest einem des ersten und zweiten Magnetfeldsensorchips (12a, 12b) befestigt ist, wobei der mindestens eine Permanentmagnet (18) insbesondere in zumindest einem des ersten und zweiten Magnetfeldsensorchips (12a, 12b) integriert ist.

5. Sensor (10) nach einem der vorangehenden Ansprüche, wobei der Aufnahmekörper (14) eine dritte Aufnahme (16c) umfasst, durch die der mindestens eine Permanentmagnet (18) aufgenommen ist.

6. Sensor (10) nach einem der Ansprüche 1 bis 3, wobei der mindestens eine Permanentmagnet einen ersten Permanentmagneten (18a) und einen zweiten Permanentmagneten (18b) umfasst;
wobei der erste Permanentmagnet (18a) an der ersten Aufnahme (16a) und der zweite Permanentmagnet (18b) an der zweiten Aufnahme (16b) angeordnet ist.

7. Sensor (10) nach Anspruch 6, wobei der erste Permanentmagnet (18a) an dem ersten Magnetfeldsensorchip (12a) befestigt ist, wobei der erste Permanentmagnet (18a) insbesondere in dem ersten Magnetfeldsensorchip (12a) integriert ist, und der zweite Permanentmagnet (18b) an dem zweiten Magnetfeldsensorchip (12b) befestigt ist, wobei der zweite Permanentmagnet (18b) insbesondere in dem zweiten Magnetfeldsensorchip (12b) integriert ist.

8. Sensor (10) nach einem der Ansprüche 6 bis 7, wobei der Aufnahmekörper (14) eine dritte und eine vierte Aufnahme (16c, 16d) umfasst, wobei der erste Permanentmagnet (18a) durch die dritte Aufnahme (16c) und der zweite Permanentmagnet (18b) durch die vierte Aufnahme (16d) aufgenommen ist.

9. Sensor (10) nach einem der vorangehenden Ansprüche, wobei der erste Magnetfeldsensorchip (12a) ein Hall-Sensorchip oder ein magnetoresistiver Sensorchip ist, und wobei der zweite Magnetfeldsensorchip (12b) ein Hall-Sensorchip oder ein magnetoresistiver Sensorchip ist.

10. Sensor (10) nach einem der vorangehenden Ansprüche, wobei der erste Magnetfeldsensorchip (12a) ein gerichteter Sensorchip ist und der zweite Magnetfeldsensorchip (12b) ein gerichteter Sensorchip ist; oder
wobei der erste Magnetfeldsensorchip (12a) ein omnidirektionaler Sensorchip ist und der zweite Magnetfeldsensorchip (12b) ein omnidirektionaler Sensorchip ist.

11. Sensor (10) nach einem der vorangehenden Ansprüche, wobei der erste und der zweite Magnetfeldsensorchip (12a, 12b) von unterschiedlichen Chiptypen sind.

12. Sensor (10) nach einem der vorangehenden Ansprüche, wobei die Aufnahmen, insbesondere die erste und die zweite Aufnahme (16a, 16b), als Kammern in dem Aufnahmekörper (14) ausgebildet sind.

13. Sensor (10) nach einem der vorangehenden Ansprüche, wobei der Sensor ein Sensorgehäuse (20) umfasst, das ein Formmerkmal (22) zur Ausrichtung des Sensors (10), insbesondere eine Ausrichtnase, aufweist.

14. Sensor (10) nach einem der vorangehenden Ansprüche, wobei der Aufnahmekörper (14) drei elektrische Kontakte zum elektrischen Kontaktieren des ersten und zweiten Magnetfeldsensorchips (12a, 12b) umfasst.

15. Sensor (10) nach einem der vorangehenden Ansprüche, wobei der Sensor (10) eine Stromschiene oder ein Stanzgitter oder Busbar als elektrischen Signalanschluss (24) umfasst.

16. Sensor (10) nach einem der vorangehenden Ansprüche, wobei der Sensor (10) ferner eine Temperaturmesszelle umfasst.

17. System (100), umfassend:
einen Sensor (10) nach einem der vorangehenden Ansprüche zur Erfassung einer Drehgeschwindigkeit und/oder Drehrichtung eines Rades eines Fahrzeuges; und
ein Polrad (P), das mit dem Rad des Fahrzeuges koppelbar ist.

18. Fahrzeug, umfassend:
ein System (100) nach Anspruch 17.
